# EUROPEAN PATENT APPLICATION

(11) **EP 4 608 036 A1**
(43) Date of publication of application: **27.08.2025**
(21) Application number: 22962307.9
(22) Date of filing: 17.10.2022
(51) Int. Cl.: H04W 72/12

(54) **METHOD AND APPARATUS FOR PROCESSING UPLINK TRANSMISSION DROP**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/125782
(87) International publication number: WO 2024/082111

(57) **Abstract**

The present application relates to the technical field of communications. Provided are a method and apparatus for processing an uplink transmission drop. By means of applying the method for processing an uplink transmission drop, an effective solution for when a terminal is subjected to IDC interference is provided; and in some special cases, the amount of uplink transmission drop can be accurately calculated, such that control over the uplink transmission drop can be effectively achieved.

## Description

### TECHNICAL FIELD

The disclosure relates to the field of communication technologies, and more particularly to a method and an apparatus for processing an uplink transmission drop.

### BACKGROUND

Due to requirements of different networks and services, the same terminal may be equipped with multiple types of transceivers, such as a long term evolution (LTE) transceiver, a 5th-generation (5G) network transceiver, a wireless-fidelity (WiFi) transceiver, a Bluetooth transceiver, and a global navigation satellite system (GNSS) transceiver. In an adjacent frequency band or a harmonic frequency band, a receiver of the terminal may be subjected to interference generated by a transmitter within the same terminal, i.e., in-device coexistence (IDC) interference. The IDC interference may originate from transceivers operating under the same or different radio access technologies (RATs).

However, effective solutions to solve the IDC interference issue are currently lacking.

### SUMMARY

For this, the disclosure provides a method and an apparatus for processing an uplink transmission drop. The main purpose of the method and the apparatus is to provide an effective solution for a terminal subjected to in-device coexistence (IDC) interference. In specific scenarios, a number of uplink transmission drops may be accurately counted, enabling effective control over the uplink transmission drop.

A first aspect of embodiments of the disclosure provides a method for processing an uplink transmission drop. The method includes determining a first number of uplink transmission drops within a target time interval, in which the first number includes a number of time units of the uplink transmission drop within the target time interval, and the time unit is configured or predefined by a network device; and dropping uplink transmission based on the first number.

In some embodiments of the disclosure, the time unit of the uplink transmission drop includes a time unit of the uplink transmission dropped due to IDC interference.

In some embodiments of the disclosure, determining the first number of uplink transmission drops within the target time interval includes: determining a first time unit as the time unit of the uplink transmission drop in the case that the first time unit within the target time interval includes two or more uplink transmissions and at least one of the two or more uplink transmissions is dropped.

In some embodiments of the disclosure, determining the first number of uplink transmission drops within the target time interval includes: determining a first time unit as the time unit of the uplink transmission drop in the case that the first time unit within the target time interval includes two or more uplink transmissions and all of the two or more uplink transmissions are dropped.

In some embodiments of the disclosure, determining the first number of uplink transmission drops within the target time interval includes: determining a second time unit as the time unit of the uplink transmission drop in the case that the second time unit within the target time interval includes a segment of a first uplink transmission, a duration of the segment in the second time unit is greater than a preset duration, and the first uplink transmission is dropped.

In some embodiments of the disclosure, determining the first number of uplink transmission drops within the target time interval includes: determining a second time unit as the time unit of the uplink transmission drop in the case that the second time unit within the target time interval includes a first segment of a second uplink transmission and the second uplink transmission is dropped.

In some embodiments of the disclosure, the method further includes: determining a third time unit as the time unit of the uplink transmission drop in the case that the third time unit within the target time interval includes a second segment of the second uplink transmission.

In some embodiments of the disclosure, determining the first number of uplink transmission drops within the target time interval includes: determining a fourth time unit or a fifth time unit as the time unit of the uplink transmission drop in the case that the fourth time unit within the target time interval includes a third segment of a third uplink transmission, the fifth time unit adjacent to the fourth time unit includes a fourth segment of the third uplink transmission, and the third uplink transmission is dropped.

In some embodiments of the disclosure, the time unit includes any one of:
a system frame number (SFN);
a subframe;
a slot;
a symbol; or
a preset duration.

In some embodiments of the disclosure, the method further includes: receiving a first configuration from the network device, the first configuration including the time unit.

In some embodiments of the disclosure, before determining the first number of uplink transmission drops within the target time interval. The method further includes: receiving a second configuration, the second configuration includes the target time interval and a second number, and the second number is a maximum number of uplink transmission drops allowed.

In some embodiments of the disclosure, dropping the uplink transmission based on the first number includes: determining that dropping the uplink transmission is allowed in the case that the first number is less than the second number; and determining that dropping the uplink transmission is not allowed in the case that the first number is greater than or equal to the second number.

A second aspect of embodiments of the disclosure provides an apparatus for processing an uplink transmission drop. The apparatus includes:
a determining module, configured to determine a first number of uplink transmission drops within a target time interval, in which the first number includes a number of time units of the uplink transmission drop within the target time interval, and the time unit is configured or predefined by a network device; and
a control module, configured to drop uplink transmission based on the first number.

A third aspect of embodiments of the disclosure provides a communication device. The communication device includes a transceiver; a memory; and a processor, connected to the transceiver and the memory respectively, configured to control transmitting and receiving of a wireless signal of the transceiver by executing computer-executable instructions in the memory, and capable of implementing the method of the first aspect of embodiments of the disclosure.

A fourth aspect of embodiments of the disclosure provides a computer storage medium. The computer storage medium stores computer-executable instructions. When the computer-executable instructions are executed by a processor, the method of the first aspect of embodiments of the disclosure is implemented.

Through the above technical solutions, the disclosure provides the method and the apparatus for processing the uplink transmission drop. The first number of uplink transmission drops within the target time interval is determined based on the network configuration or the protocol-agreed rule. The first number includes the number of time units of the uplink transmission drop within the target time interval. The time unit is configured or predefined by the network device. In this way, in a specific condition, the terminal and the network device may maintain a consistent understanding of the number of uplink transmission drops of the terminal. Then the uplink transmission is dropped based on the first number, thus implementing the control of whether the terminal is allowed to drop the uplink transmission. In this way, the network device more accurately controls the number of uplink transmission drops of the terminal, thus reducing packet loss. Thus, the disclosure provides an effective solution for the terminal when subjected to the IDC interference.

The above embodiments are only an overview of the technical solution of the disclosure. In order to obtain a clearer understanding of the technical solution of the disclosure, the technical solution may be implemented based on contents of the specification. In order to enable the above and other purposes, features and advantages of the disclosure more obvious and easy to understand, the following provides specific embodiments of the disclosure.

### BRIEF DESCRIPTION OF THE DRAWINGS

Accompanying drawings herein are incorporated into the specification and constitute a part of the specification, illustrating embodiments consistent with the disclosure, and serve to explain the principle of embodiments of the disclosure together with the specification.

In order to more clearly illustrate a technical solution in embodiments of the disclosure or the related art, the accompanying drawings needed for use in the description in the embodiments or the related art may be briefly introduced below. Obviously, for those skilled in the art, other figures may be obtained based on these accompanying drawings without creative works.
FIG. 1 is a schematic diagram illustrating a structure of a network system to which embodiments of the disclosure are applicable.
FIG. 2 is a flow chart illustrating a method for processing an uplink transmission drop according to an embodiment of the disclosure.
FIG. 3 is a flow chart illustrating a method for processing an uplink transmission drop according to an embodiment of the disclosure.
FIG. 4 is a schematic diagram illustrating an example according to an embodiment of the disclosure.
FIG. 5 is a flow chart illustrating a method for processing an uplink transmission drop according to an embodiment of the disclosure.
FIG. 6 is a flow chart illustrating a method for processing an uplink transmission drop according to an embodiment of the disclosure.
FIG. 7 is a schematic diagram illustrating an example according to an embodiment of the disclosure.
FIG. 8 is a flow chart illustrating a method for processing an uplink transmission drop according to an embodiment of the disclosure.
FIG. 9 is a flow chart illustrating a method for processing an uplink transmission drop according to an embodiment of the disclosure.
FIG. 10 is a flow chart illustrating a method for processing an uplink transmission drop according to an embodiment of the disclosure.
FIG. 11 is a block diagram illustrating an apparatus for processing an uplink transmission drop according to an embodiment of the disclosure.
FIG. 12 is a block diagram illustrating a communication device according to an embodiment of the disclosure.
FIG. 13 is a block diagram illustrating a chip according to an embodiment of the disclosure.

### DETAILED DESCRIPTION

Embodiments of the disclosure are described in detail below, and examples of the embodiments are illustrated in the accompanying drawings, in which, the same or similar numbers represent the same or similar elements or elements with the same or similar functions throughout. The embodiments described below with reference to the accompanying drawings are exemplary, which are intended to be used to explain the disclosure and are not to be construed as a limitation of the disclosure. It should be noted that embodiments of the disclosure and features in the embodiments may be combined with each other without conflict.

Terms used in embodiments of the disclosure are for the purpose of describing specific embodiments only, and are not intended to limit the embodiments of the disclosure. As used in embodiments of the disclosure and the appended claims, the singular forms "a" and "the" are also intended to include the plural forms unless the context clearly dictates otherwise. It should also be understood that the term "and/or" as used herein refers to and includes any and all possible combinations of one or more of the associated listed items.

It should be understood that although embodiments of the disclosure may use the terms first, second, third, etc. to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" as used herein may be interpreted as "in the case that" or "when" or "in response to determining".

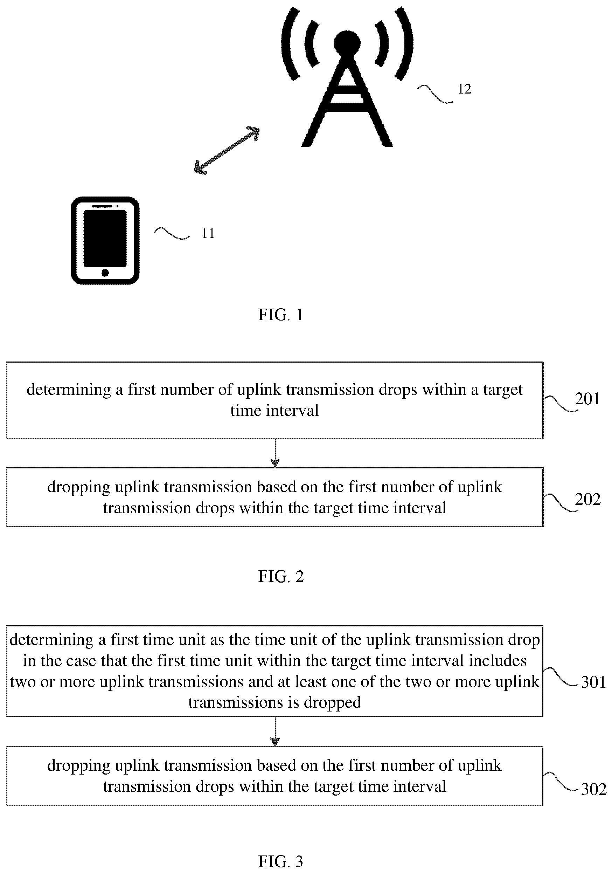

FIG. 1 is a schematic diagram illustrating a structure of a network system to which embodiments of the disclosure are applicable. As illustrated in FIG. 1, the network system includes a terminal 11 and a network device 12. The terminal 11 may be a user terminal or other terminal-side device, such as a mobile phone, a tablet personal computer, a laptop computer, a personal digital assistant (PDA), a mobile internet device (MID), or a wearable device. It should be noted that a detailed type of the terminal 11 is not limited in the embodiments. The network device 12 may be a 5th-generation (5G) base station, a base station of a future network generation, a base station in another communication system, a transmission reception point (TRP), or an access point (AP).

Currently, the same terminal 11 may be equipped with two or more transceivers, such as a transceiver equipped on a long term evolution (LTE) smart phone or an LTE mobile hotspot, a 5th-generation (5G) network transceiver, a wireless-fidelity (WiFi) transceiver, a Bluetooth transceiver, and a global navigation satellite system (GNSS) transceiver, or the like. Mutual interference between uplink and downlink transmissions of a wireless system may occur when different transceivers operate simultaneously. The mutual interference may be referred as in-device coexistence (IDC) interference. The IDC interference may cause one or more transceivers to fail to work normally.

For example, the terminal 11 may include a transceiver 1 and a transceiver 2, such as, an LTE transceiver and the WiFi/Bluetooth transceiver. When an operating frequency of the LTE transceiver is adjacent to an operating frequency of the WiFi/Bluetooth transceiver, the IDC interference may occur. For example, the LTE transceiver may operate in a frequency band 40 (2300 MHz to 2400 MHz) and a frequency band 7 (2500 MHz to 2570 MHz). The WiFi/Bluetooth transceiver operates in a frequency band (2400 MHz to 2500 MHz). It can be seen that the frequency band of the LTE transceiver is adjacent to the frequency band of the WiFi/Bluetooth transceiver. Consequently, severe mutual interference may be caused when the LTE transceiver and the WiFi/BT transceiver in the terminal 11 are simultaneously operated.

For this, embodiments provide a method and an apparatus for processing an uplink transmission drop, which may reduce or avoid the IDC interference of the terminal 11. In some embodiments, the number of uplink transmission drops may also be counted accurately, thus controlling the uplink transmission drop accurately.

Description will be made in detail below to a method and an apparatus for processing an uplink transmission drop according to the disclosure with the reference to accompanying drawings.

FIG. 2 is a flow chart illustrating a method for processing an uplink transmission drop according to an embodiment of the disclosure. Based on the embodiments illustrated in FIG. 1, as illustrated in FIG. 2, the method may be applied to a terminal, and includes the following.

At block 201, a first number of uplink transmission drops within a target time interval is determined.

The first number may include a number of time units of the uplink transmission drop within the target time interval. The time unit may be understood as a time length unit for counting the number of uplink transmission drops within the target time interval. The time unit is configured or predefined by a network device. In an example, a granularity (or time granularity) of the time unit may be any one of: a system frame number (SFN); a subframe; a slot; a symbol; or a preset duration (such as, a time length expressed in a format such as milliseconds, such as, N milliseconds, etc.). The time unit may be one of the time granularities, and a detailed time granularity of the time unit may be determined based on an actual requirement. The target time interval may include a plurality of time units.

For example, in the case that the target time interval is 200 subframes, the time unit may be any one of: N subframes, N slots, N symbols, or N milliseconds, where N is an integer greater than 1. For another example, in the case that the target time interval is 100 SFNs, the time unit may be any one of: N SFNs, N subframes, N slots, N symbols, or N milliseconds, where N is an integer greater than 1. For another example, in the case that the target time interval is 500 slots, the time unit may be any one of: N slots, N symbols, or N milliseconds, where N is an integer greater than 1.

In embodiments, the first number of uplink transmission drops within the target time interval may be counted based on a network configuration or a protocol-agreed rule. The network configuration or the protocol agreed rule may be used to count the number of uplink transmission drops of the time unit within the target time interval, improving the counting accuracy. Based on the network configuration or the protocol agreed rule, the counted number of uplink transmission drops of the time unit may be the number of uplink transmission drops dropped by the terminal due to the IDC interference. That is, the time unit of the uplink transmission drop includes a time unit of an uplink transmission dropped due to the IDC interference. In detail, the counted number of uplink transmission drops in some special conditions may be included. For example, the special condition may be a determining rule for counting the uplink transmission drop in the case that one time unit includes multiple uplink transmissions, or one time unit includes one non-complete uplink transmission (e.g., one time unit includes a fragment of one uplink transmission). It is ensured that the terminal and the network device have a consistent understanding of the number of uplink transmission drops of the terminal in the special conditions.

At block 202, uplink transmission is dropped based on the first number of uplink transmission drops within the target time interval.

The terminal in this embodiment may be a user terminal or other terminal, such as a mobile phone, a tablet personal computer, a laptop computer, a personal digital assistant (PDA), a mobile Internet device (MID), a wearable device, or other terminals. It should be noted that a detailed type of terminal is not limited in this embodiment.

In this embodiment, the terminal may be accurately controlled to drop uplink transmission data when subjected to the IDC interference based on a counted result of the uplink transmission drop of each time unit within the target time interval.

In the method for processing the uplink transmission drop in embodiments, the first number of uplink transmission drops within the target time interval is determined, in which the first number includes the number of time units of the uplink transmission drop within the target time interval, and the time unit is configured or predefined by the network device. Thus, the terminal and the network device may maintain a consistent understanding of the number of uplink transmission drops of the terminal. Then the uplink transmission is dropped based on the first number, thus implementing the control of whether the terminal is allowed to drop the uplink transmission, such that the network device controls the number of uplink transmission drops of the terminal more accurately, thus reducing the packet loss and reducing or avoiding the IDC interference of the terminal.

FIG. 3 is a flow chart illustrating a method for processing an uplink transmission drop according to an embodiment of the disclosure. The method may be applied to a terminal. Based on the embodiments illustrated in FIG. 2, as illustrated in FIG. 3, the method may include the following.

At block 301, a first time unit is determined as the time unit of the uplink transmission drop in the case that the first time unit within the target time interval includes two or more uplink transmissions and at least one of the two or more uplink transmissions is dropped.

The first time unit may be one time unit within the target time interval, and may specifically include the two or more uplink transmissions. In these embodiments, the first time unit may specifically be one time interval for counting the uplink transmission drop. In the case that the time interval for counting the uplink transmission drop includes multiple independent uplink transmissions, and any one of the multiple independent uplink transmissions is dropped, the time interval for counting the uplink transmission drop may be determined to be dropped, the first time unit is determined as the time unit of the uplink transmission drop.

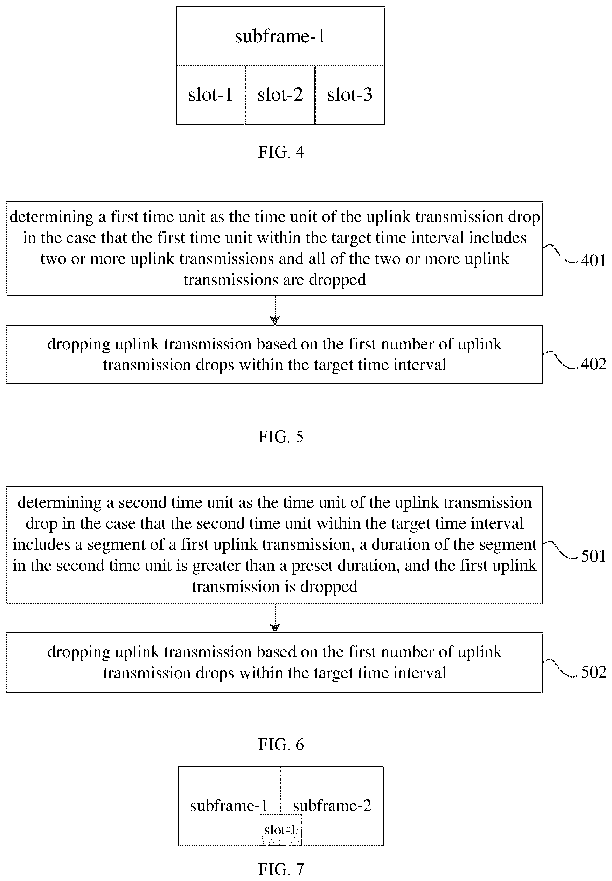

For example, the first time unit may be one subframe. That is, one time interval for counting the uplink transmission drop may be one subframe, such as, a subframe-1. The time interval for counting the uplink transmission drop includes three independent uplink transmissions. As illustrated in FIG. 4, one uplink subframe-1 includes three uplink slots (it should be noted that, in a practical application, the subframe-1 may include a symbol, or a preset duration, etc., such example uses the slot for illustration only and does not limit the content of the embodiment method), respectively a slot-1, a slot-2, and a slot-3. In the case that any uplink transmission in the slot-1, slot-2, slot-3 is dropped, it is determined the time interval (subframe-1) for counting the uplink transmission drop is dropped, i.e., the subframe-1 has one uplink transmission drop.

At block 302, uplink transmission is dropped based on the first number of uplink transmission drops within the target time interval.

For example, in the case that the time unit is one subframe, the first number of uplink transmission drops within the target time interval is determined based on a counted result of the uplink transmission drop of each subframe (such as, the a subframe-1, a subframe-2...a subframe-n), thus controlling the terminal to drop the uplink transmission data when the terminal is subjected to the IDC interference.

With the method for processing the uplink transmission drop according to embodiments, the accuracy of counting the number of uplink transmission drops may also be improved in the case that one time unit includes multiple uplink transmissions. For example, the first time unit is determined as the time unit of the uplink transmission drop in the case that the first time unit includes the two or more uplink transmissions and at least one of the two or more uplink transmissions is dropped. Then the control of whether the terminal is allowed to drop the uplink transmission is implemented based on the counted result of the uplink transmission drop of each time unit, such that the network device controls the number of uplink transmission drops of the terminal more accurately, thus reducing the packet loss and reducing or avoiding the IDC interference of the terminal.

FIG. 5 is a flow chart illustrating a method for processing an uplink transmission drop according to an embodiment of the disclosure. The method may be applied to a terminal. Based on the embodiments illustrated in FIG. 2, as illustrated in FIG. 5, the method may include the following.

At block 401, a first time unit is determined as the time unit of the uplink transmission drop in the case that the first time unit within the target time interval includes two or more uplink transmissions and all of the two or more uplink transmissions are dropped.

The first time unit may be one time unit within the target time interval, and one time unit may specifically include the two or more uplink transmissions. In an embodiment of the disclosure, the first time unit includes the two or more uplink transmissions, which may be understood that the first time unit is configured to transmit the two or more uplink transmissions. In this embodiment, the first time unit may be specifically a time interval for counting the uplink transmission drop. In the case that the time interval for counting the uplink transmission drop includes multiple independent uplink transmissions, and all of the independent uplink transmissions are dropped, it may be determined that the time interval for counting the uplink transmission drop is dropped. That is, the first time unit is determined as the time unit of the uplink transmission drop.

For example, the first time unit may be one subframe. That is, one time interval for counting the uplink transmission drop may be one subframe, such as, a subframe-1. The time interval for counting the uplink transmission drop includes three independent uplink transmissions. As illustrated in FIG. 4, one uplink subframe-1 includes three uplink slots (it should be noted that, in a practical application, the subframe-1 may include a symbol, or a preset duration, etc., such example uses the slot for illustration only and does not limit the content of the embodiment method), respectively a slot-1, a slot-2, and a slot-3. In the case that all uplink transmissions in the slot-1, slot-2, slot-3 are dropped, it is determined that the time interval (subframe-1) for counting the uplink transmission drop is dropped, i.e., the subframe-1 has one transmission drop.

In some examples, it is determined that the first time unit is not the time unit of the uplink transmission drop in the case that the first time unit within the target time interval includes the two or more uplink transmissions and any one of the two or more uplink transmissions is not dropped.

For example, as illustrated in FIG. 4, in the case that one uplink transmission in the slot-1, slot-2, slot-3 is not dropped, it may be determined that the subframe-1 is not the time unit of the uplink transmission drop.

At block 402, uplink transmission is dropped based on the first number of uplink transmission drops within the target time interval.

For example, in the case that the time unit is one subframe, the first number of uplink transmission drops within the target time interval is determined based on a counted result of the uplink transmission drop of each subframe (e.g., the subframe-1, a subframe-2...a subframe-n), thus controlling the terminal to drop uplink transmission data when the terminal is subjected to the IDC interference.

It should be noted that although the embodiments illustrated in FIG. 5 are described on the basis of the embodiments illustrated in FIG. 2, the embodiments illustrated in FIG. 5 may be described similarly on the basis of the embodiments illustrated in FIG. 3, which will not be repeated herein.

With the method for processing the uplink transmission drop according to the embodiments, the accuracy of counting the number of uplink transmission drops may also be improved in the case that one time unit includes multiple uplink transmissions. For example, the first time unit is determined as the time unit of the uplink transmission drop in the case that the first time unit includes the two or more uplink transmissions and all of the two or more uplink transmissions are dropped. Then the control of whether the terminal is allowed to drop the uplink transmission is implemented based on the counted result of the uplink transmission drop of each time unit, such that the network device controls the number of uplink transmission drops of the terminal more accurately, thus reducing the packet loss, and reducing or avoiding the IDC interference of the terminal.

FIG. 6 is a flow chart illustrating a method for processing an uplink transmission drop according to an embodiment of the disclosure. The method may be applied to a terminal. Based on the embodiments illustrated in FIG. 2, as illustrated in FIG. 6, the method may include the following.

At block 501, a second time unit is determined as the time unit of the uplink transmission drop in the case that the second time unit within the target time interval includes a segment of a first uplink transmission, a duration of the segment in the second time unit is greater than a preset duration, and the first uplink transmission is dropped.

The second time unit may be one time unit within the target time interval, and may specifically include a non-complete uplink transmission. The preset duration may be predetermined based on an actual requirement. In these embodiments, the second time unit may specifically be one time interval for counting the uplink transmission drop. In the case that the time interval for counting the uplink transmission drop includes one non-complete uplink transmission, and a duration of the non-complete uplink transmission within the time interval for counting the uplink transmission drop is greater than the preset duration configured by the network or agreed by the protocol, and the non-complete uplink transmission is dropped, it may be determined that the time interval for counting the uplink transmission drop is dropped. That is, the second time unit is the time unit of the uplink transmission drop.

For example, the second time unit may be one subframe. That is, one time interval for counting the uplink transmission drop may be one subframe, such as a subframe-1 or a subframe-2, etc. The time interval for counting the uplink transmission drop includes one non-complete uplink transmission. As illustrated in FIG. 7, one uplink slot (it should be noted that a symbol, or a preset duration, etc., may also be used in a practical application, such example uses the slot for illustration only and does not limit the content of the embodiment method) is included in two subframes, i.e., one uplink slot-1 is included in an uplink subframe-1 and an uplink subframe-2. For the subframe-1, in the case that the duration of the slot-1 within the subframe-1 is greater than the preset duration configured by the network or agreed by the protocol (e.g., the duration of the uplink transmission of the slot-1 in the subframe-1 is more than x nanoseconds) and the terminal drops the uplink transmission of the slot-1, it is determined that the time interval (subframe-1) for counting the uplink transmission drop is dropped. That is, the subframe-1 has one transmission drop.

In some embodiments, it is determined that the second time unit is not the time unit of the uplink transmission drop in the case that the second time unit within the target time interval includes the segment of one first uplink transmission, the duration of the segment in the second time unit is lower than the preset duration, and the first uplink transmission is dropped.

For example, as illustrated in FIG. 7, in the case that the duration of the slot-1 within the subframe-2 is lower than the preset duration, and the terminal drops the uplink transmission of the slot-1, the subframe-2 is not the time unit for the uplink transmission drop.

At block 502, uplink transmission is dropped based on the first number of uplink transmission drops within the target time interval.

For example, in the case that the time unit is one subframe, the first number of uplink transmission drops within the target time interval is determined based on a counted result of the uplink transmission drop of each subframe (such as, the subframe-1, the subframe-2, ..., a subframe-n), thus controlling the terminal to drop uplink transmission data when the terminal is subjected to the IDC interference.

It should be noted that although the embodiments illustrated in FIG. 6 are described on the basis of the embodiments illustrated in FIG. 2, the embodiments illustrated in FIG. 6 may be described similarly on the basis of the embodiments illustrated in FIG. 3 and/or FIG. 5, which will not be repeated herein.

With the method for processing the uplink transmission drop according to these embodiments, the accuracy of counting the number of the uplink transmission drops may also be improved in the case that one time unit includes one non-complete uplink transmission. For example, the second time unit is determined as the time unit of the uplink transmission drop in the case that the second time unit within the target time interval includes the segment of the first uplink transmission, the duration of the segment in the second time unit is greater than the preset duration, and the first uplink transmission is dropped. Then the control of whether the terminal is allowed to drop the uplink transmission is implemented based on the counted result of the uplink transmission drop of each time unit, such that the network device more accurately controls the number of uplink transmission drops of the terminal, thus reducing the packet loss and reducing or avoiding the IDC interference of the terminal.

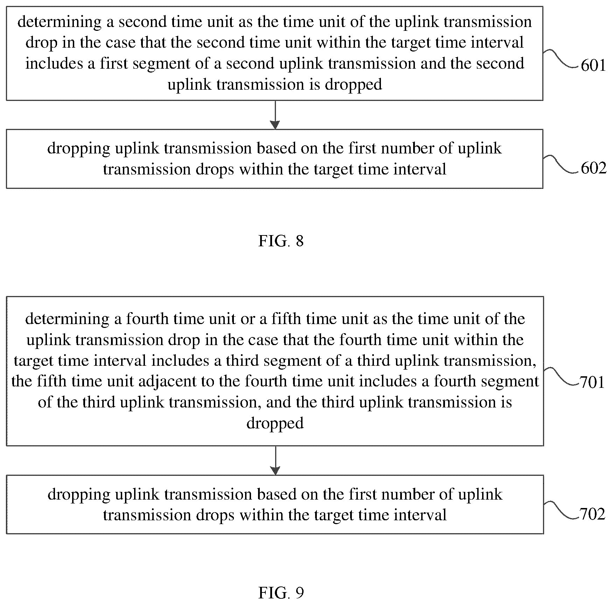

FIG. 8 is a flow chart illustrating a method for processing an uplink transmission drop according to an embodiment of the disclosure. The method may be applied to a terminal. Based on the embodiments illustrated in FIG. 2, as illustrated in FIG. 8, the method may include the following.

At block 601, a second time unit is determined as the time unit of the uplink transmission drop in the case that the second time unit within the target time interval includes a first segment of a second uplink transmission and the second uplink transmission is dropped.

The second time unit may be one time unit within the target time interval, and may specifically include a non-complete uplink transmission. In these embodiments, the second time unit may specifically be one time interval for counting the uplink transmission drop. In the case that the time interval for counting the uplink transmission drop includes one non-complete uplink transmission, and the non-complete uplink transmission is dropped, it may be determined that the time interval for counting the uplink transmission drop is dropped. That is, the second time unit is the time unit of the uplink transmission drop.

For example, the second time unit may be one subframe. That is, one time interval for counting the uplink transmission drop may be one subframe, such as, a subframe-1. The time interval for counting the uplink transmission drop includes one non-complete uplink transmission, such as one non-complete uplink slot-1 (it should be noted that a symbol, or a preset duration, etc., may also be used in a practical requirement, such example uses the slot for illustration only and does not limit the content of the embodiment method). In the case that the terminal drops the uplink transmission of the slot-1, it is determined that the time interval (subframe-1) for counting the uplink transmission drop is dropped. That is, the subframe-1 has one transmission drop.

In some embodiments, a third time unit is determined as the time unit of the uplink transmission drop in the case that the third time unit within the target time interval includes a second segment of the second uplink transmission. For example, as illustrated in FIG. 7, in the case that the terminal drops the uplink transmission of the slot-1, the subframe-1 is determined to be dropped, i.e., the subframe-1 has one transmission drop, and the subframe-2 is determined to be dropped, i.e., the subframe-2 also has one transmission drop.

At block 602, uplink transmission is dropped based on the first number of uplink transmission drops within the target time interval.

For example, in the case that the time unit is one subframe, the first number of uplink transmission drops within the target time interval is determined based on a counted result of the uplink transmission drop of each subframe (e.g., the subframe-1, the subframe-2, ..., a subframe-n), thus controlling the terminal to drop uplink transmission data when the terminal is subjected to the IDC interference.

It should be noted that although the embodiments illustrated in FIG. 8 are described based on the embodiments illustrated in FIG. 2, the embodiments illustrated in FIG. 8 may be described similarly on the basis of the embodiments illustrated in FIG. 3 and/or FIG. 5 and/or FIG. 6, which will not be repeated herein.

With the method for processing the uplink transmission drop according to these embodiments, the accuracy of counting the number of the uplink transmission drops may also be improved in the case that one time unit includes one non-complete uplink transmission. For example, the second time unit is determined as the time unit of the uplink transmission drop in the case that the second time unit within the target time interval includes the first segment of the second uplink transmission and the second uplink transmission is dropped. Then the control of whether the terminal is allowed to drop the uplink transmission is implemented based on the counted result of the uplink transmission drop of each time unit, such that the network device more accurately controls the number of uplink transmission drops of the terminal, thus reducing a packet loss, and reducing or avoiding the IDC interference of the terminal.

FIG. 9 is a flow chart illustrating a method for processing an uplink transmission drop according to an embodiment of the disclosure. The method may be applied to a terminal. Based on the embodiments illustrated in FIG. 2, as illustrated in FIG. 9, the method may include the following.

At block 701, a fourth time unit or a fifth time unit is determined as the time unit of the uplink transmission drop in the case that the fourth time unit within the target time interval includes a third segment of a third uplink transmission, the fifth time unit adjacent to the fourth time unit includes a fourth segment of the third uplink transmission, and the third uplink transmission is dropped.

In some embodiments, the fourth time unit and the fifth time unit are within the target time interval. That is, the fourth time unit and the fifth time unit may be two adjacent time units within the target time interval, both the fourth time unit and the fifth time unit include one uplink transmission (i.e., the third uplink transmission). It should be noted that the fourth time unit and the fifth time unit may include a complete third uplink transmission or may include a non-complete third uplink transmission. For example, in the case that one uplink transmission is included in two adjacent time intervals for counting the uplink transmission drop and the uplink transmission is dropped, it may be determined that the previous or the latter of the two time intervals for counting the uplink transmission drop is dropped. That is, the fourth time unit or the fifth time unit is determined as the time unit of the uplink transmission drop.

For example, the time unit may be one subframe. That is, one time interval for counting the uplink transmission drop may be one subframe, e.g., a subframe-1 or a subframe-2, etc. The time interval for counting the uplink transmission drop includes one non-complete uplink transmission. As illustrated in FIG. 7, one uplink slot (it should be noted that a symbol, or a preset duration, etc., may also be used in a practical application, such example uses the slot for illustration only and does not limit the content of the embodiment method) is included in two subframes, such as, one uplink slot-1 is included in an uplink subframe-1 and an uplink subframe-2. In the case that the terminal drops the uplink transmission of the slot-1, the subframe-1 or the subframe-2 is determined to be dropped.

At block 702, uplink transmission is dropped based on the first number of uplink transmission drops within the target time interval.

For example, the time unit may be one subframe. The first number of uplink transmission drops within the target time interval is determined based on a counted result of the uplink transmission drop of each subframe (e.g., the subframe-1, the subframe-2, ..., a subframe-n), thus controlling the terminal to drop uplink transmission data when the terminal is subjected to the IDC interference.

It should be noted that although the embodiments illustrated in FIG. 9 are described on the basis of the embodiments illustrated in FIG. 2, the embodiments illustrated in FIG. 8 may be described similarly based on the embodiments illustrated in FIG. 3 and/or FIG. 5 and/or FIG. 6 and/or FIG. 8, which will not be repeated herein.

With the method for processing the uplink transmission drop provided in these embodiments, the accuracy of counting the number of uplink transmission drops is improved in the case that one time unit includes one non-complete uplink transmission. For example, the fourth time unit or the fifth time unit is determined as the time unit of the uplink transmission drop in the case that the fourth time unit within the target time interval includes the third segment of the third uplink transmission, the fifth time unit adjacent to the fourth time unit includes the fourth segment of the third uplink transmission, and the third uplink transmission is dropped. Then the control of whether the terminal is allowed to drop the uplink transmission is implemented based on the counted result of the uplink transmission drop of each time unit, such that the network device more accurately controls the number of uplink transmission drops of the terminal, thus reducing packet loss and reducing or avoiding the IDC interference of the terminal.

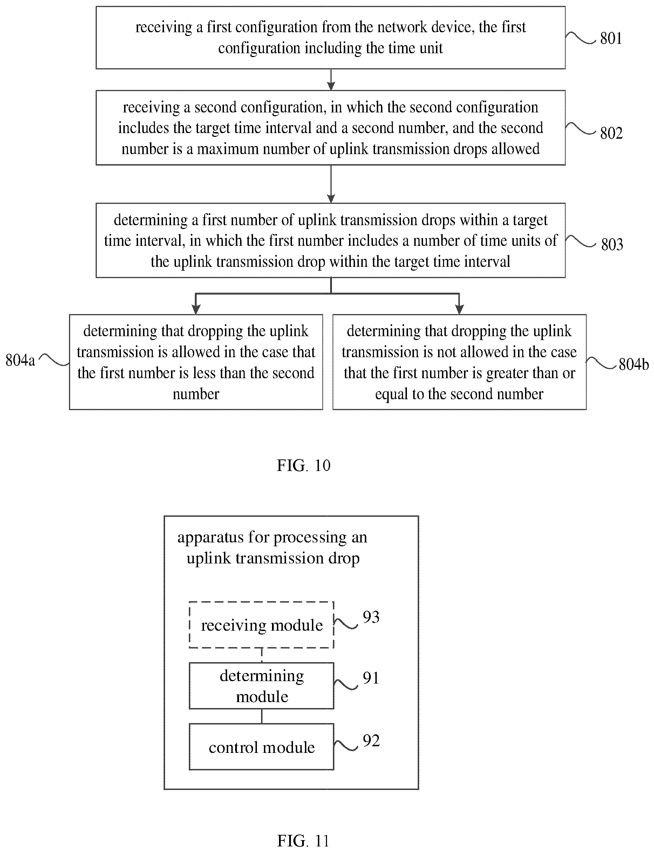

FIG. 10 is a flow chart illustrating a method for processing an uplink transmission drop according to an embodiment of the disclosure. The method may be applied to a terminal. Based on the embodiments illustrated in FIG. 2, as illustrated in FIG. 10, the method may include the following.

At block 801, a first configuration is received from a network device, the first configuration including a time unit.

At block 802, a second configuration is received from the network device, the second configuration including a target time interval and a second number, and the second number is a maximum number of uplink transmission drops allowed.

It should be noted that an order of executing actions at block 801 and block 802 is not limited in this embodiment, and in practice, actions at block 802 may also be implemented before or at the same time as actions at block 801. In some embodiments, the first configuration and the second configuration are carried in different messages, or the first configuration and the second configuration are carried in the same message.

The time unit may be a time granularity for counting the number of uplink transmission drops within the target time interval. The target time interval includes multiple time units. In these embodiments, the time unit may specifically be one time interval for counting the uplink transmission drop. The target time interval may be a control time interval of the uplink transmission drop.

At block 803, a first number of uplink transmission drops within the target time interval is determined, in which the first number includes a number of time units of the uplink transmission drop within the target time interval.

At block 804a, it is determined that dropping the uplink transmission is allowed in the case that the first number is less than the second number.

At block 804b, parallel to block 804a, it is determined that dropping the uplink transmission is not allowed in the case that the first number is greater than or equal to the second number.

For example, in order to solve the problem of the terminal subjected to the IDC interference, the terminal may introduce an uplink transmission drop control configured by the network, which is used for the terminal to drop some of the uplink transmission when the terminal is subjected to the IDC interference. The uplink transmit drop control configuration includes two parameters: the control time interval of the uplink transmission drop (i.e., the target time interval) and the maximum number of uplink transmission drops allowed (i.e., the second number). For example, in the case that the control time interval of the uplink transmission drop includes 200 subframes, and the maximum number of uplink transmission drops allowed is 2 subframes, this means that the maximum number of subframes allowed to be dropped is 2 subframes in 200 subframes. In a detailed control process, the number of uplink transmission drops within the time interval of the 200 subframes is obtained based on the number of uplink transmission drops (i.e., the first number) of each time unit (each 1 subframe), thus implementing the control of whether the terminal is allowed to drop the uplink transmission. It is determined that dropping the uplink transmission is allowed in the case that the first number is less than the second number. It is determined that dropping the uplink transmission is not allowed in the case that the first number is greater than or equal to the second number. Thus, the terminal may drop some uplink transmissions according to a ratio (i.e., not exceeding a maximum drop number within a specific time interval) configured by the network based on the configuration of the network device.

It should be noted that although the embodiments illustrated in FIG. 10 are described on the basis of the embodiments illustrated in FIG. 2, the embodiments illustrated in FIG. 10 may be described similarly based on the embodiments illustrated in FIG. 3 and/or FIG. 5 and/or FIG. 6 and/or FIG. 8 and/or FIG. 9, which will not be repeated herein.

With the method for processing the uplink transmission drop according to the embodiments, the uplink transmission drop within the target time interval may be counted based on a network configuration or a protocol-agreed rule, thus improving the counting accuracy. In this way, in a specific condition, the terminal and the network device may maintain a consistent understanding of the number of uplink transmission drops of the terminal, thus implementing accurately control of whether t the terminal is allowed to drop the uplink transmission. The network device may more accurately control the number of uplink transmission drops of the terminal, thus reducing packet loss and reducing or avoiding the IDC interference of the terminal.

In the above embodiments according to the disclosure, description is made to the method according to embodiments of the disclosure from the perspectives of the terminal. In order to realize each of the functions in the method according to the above embodiments of the disclosure, the terminal may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the method for processing the uplink transmission drop provided in the embodiments described above, the disclosure also provides an apparatus for processing an uplink transmission drop. Since the apparatus for processing the uplink transmission drop according to embodiments of the disclosure corresponds to the methods for processing the uplink transmission drop according to the embodiments described above, the implementation of the method for processing the uplink transmission drop is also applicable to the apparatus for processing the uplink transmission drop according to the following embodiments, which will not be described in detail in the following embodiments.

FIG. 11 is a block diagram illustrating an apparatus for processing an uplink transmission drop according to an embodiment of the disclosure. The apparatus for processing the uplink transmission drop may be configured in a terminal.

As illustrated in FIG. 11, the apparatus may include a determining module 91 and a control module 92.

The determining module 91 is configured to determine a first number of uplink transmission drops within a target time interval, in which the first number includes a number of time units of the uplink transmission drop within the target time interval, and the time unit is configured or predefined by a network device

The control module 92 is configured to drop uplink transmission based on the first number

In some embodiments, the time unit of the uplink transmission drop includes a time unit of the uplink transmission dropped due to IDC interference.

In some embodiments, the determining module 91 is specifically configured to determine a first time unit as the time unit of the uplink transmission drop in the case that the first time unit within the target time interval includes two or more uplink transmissions and at least one of the two or more uplink transmissions is dropped.

In some embodiments, the determining module 91 is specifically configured to determine a first time unit as the time unit of the uplink transmission drop in the case that the first time unit within the target time interval includes two or more uplink transmissions and all of the two or more uplink transmissions are dropped.

In some embodiments, the determining module 91 is specifically configured to determine a second time unit as the time unit of the uplink transmission drop in the case that the second time unit within the target time interval includes a segment of a first uplink transmission, a duration of the segment in the second time unit is greater than a preset duration, and the first uplink transmission is dropped.

In some embodiments, the determining module 91 is specifically configured to determine a second time unit as the time unit of the uplink transmission drop in the case that the second time unit within the target time interval includes a first segment of a second uplink transmission and the second uplink transmission is dropped.

In some embodiments, the determining module 91 is specifically configured to determine a third time unit as the time unit of the uplink transmission drop in the case that the third time unit within the target time interval includes a second segment of the second uplink transmission.

In some embodiments, the determining module 91 is specifically configured to determine a fourth time unit or a fifth time unit as the time unit of the uplink transmission drop in the case that the fourth time unit within the target time interval includes a third segment of a third uplink transmission, the fifth time unit adjacent to the fourth time unit includes a fourth segment of the third uplink transmission, and the third uplink transmission is dropped.

In some embodiments, the time unit includes any one of: an SFN; a subframe; a slot; a symbol; or a preset duration.

In some embodiments, the apparatus further includes a receiving module 93. The receiving module 93 is configured to receive a first configuration from the network device. The first configuration includes the time unit.

In some embodiments, the receiving module 93 is further configured to receive a second configuration. The second configuration includes the target time interval and a second number, and the second number is a maximum number of uplink transmission drops allowed.

In some embodiments, the control module 92 is specifically configured to determine that dropping the uplink transmission is allowed in the case that the first number is less than the second number; and determine that dropping the uplink transmission is not allowed in the case that the first number is greater than or equal to the second number.

With the method and the apparatus for processing the uplink transmission drop according to the disclosure, the first number of uplink transmission drops within the target time interval based on the network configuration or the protocol-agreed rule. The first number includes the number of time units of the uplink transmission drop within the target time interval. In this way, in a specific condition, the terminal and the network device may maintain a consistent understanding of the number of uplink transmission drops of the terminal. Then the uplink transmission is dropped based on the first number, thus implementing the control of whether the terminal is allowed to drop the uplink transmission. The network device may more accurately control the number of uplink transmission drops of the terminal, thus reducing packet loss, and reducing or avoiding the IDC interference of the terminal.

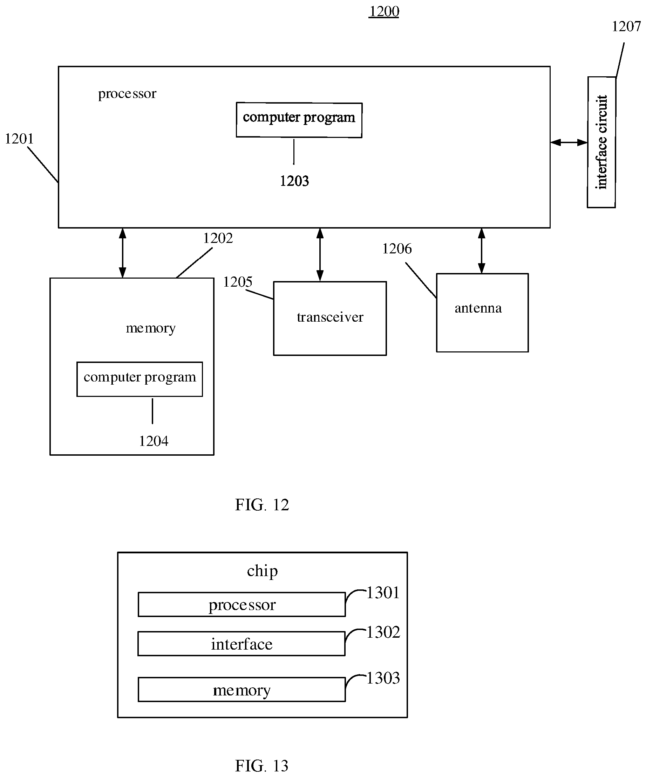

FIG. 12 is a block diagram illustrating a communication device 1200 according to an embodiment of the disclosure. The communication device 1200 may be a network device, a UE, a chip, a chip system or a processor that supports the network device to implement the method, or a chip, a chip system or a processor that supports the UE to implement the method. The device 1200 may be configured to implement the method described in the method embodiments, which may refer to descriptions in the method embodiments.

The communication device 1200 may include one or more processors 1201. The processor 1201 may include a general purpose processor or a dedicated processor. For example, the processor 1201 may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Alternatively, the communication device 1200 may further include one or more memories 1202 with a computer program 1304 stored thereon. A processor 1201 executes the computer program 1204 to enable the communication device 1200 to execute the method as described in the above method embodiments. Alternatively, the memory 1202 may further store data. The communication device 1200 and the memory 1202 may be independently configured or integrated together.

Alternatively, the communication device 1200 may further include a transceiver 1205 and an antenna 1206. The transceiver 1205 may be referred to as a transceiver unit, a transceiver or a transceiver circuit, which may be configured to achieve a receiving and transmitting function. The transceiver 1205 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Alternatively, the communication device 1200 may further include one or more interface circuits 1207. The interface circuit 1207 is configured to receive code instructions and transmit the code instructions to the processor 1201. The processor 1201 runs the code instructions to enable he communication device 1200 to execute the method according to the above method embodiments.

In an implementation, the processor 1201 may include a transceiver configured to implement the receiving and transmitting function. For example, the transceiver may be a transceiver circuit, or an interface, or an interface circuit. The transceiver circuit, the interface or the interface circuit configured to implement the receiving and transmitting function may be separate or integrated together. The transceiver circuit, the interface or the interface circuit may be configured to read and write codes/data, or the transceiver circuit, the interface or the interface circuit may be configured to transmit or deliver a signal.

In an implementation, the processor 1201 may be stored with a computer program 1203. The computer program 1203 runs on the processor 1201 to enable the communication device 1200 to execute the method as described in the above method embodiments. The computer program 1203 may be solidified in the processor 1201, in which case the processor 1201 may be implemented by hardware.

In an implementation, the communication device 1200 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a UE, but the scope of the communication device described in the disclosure is not limited thereto, and a structure of the communication device may not be limited by FIG. 12. The communication device may be a stand-alone device or may be a part of a larger device. For example, the communication device may be the following.
(1) a stand-alone integrated circuit (IC), or a chip, or a chip system or a subsystem;
(2) a set of one or more ICs, alternatively, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

In the case that the communication device may be the chip or the chip system, please refer to a diagram of a structure of a chip as illustrated in FIG. 13 in embodiments of the disclosure. The chip illustrated in FIG. 13 includes a processor 1301 and an interface 1302, in which the number of processors 1301 may be one or more and the number of interfaces 1103 may be more than one.

Alternatively, the chip further includes a memory 1303, configured to store necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on a specific application and a design requirement of an overall system. Those skilled in the art may implement the functions by using various methods for each specific application, but such implementation should not be understood as beyond the protection scope of embodiments of the disclosure.

A readable storage medium with instructions stored thereon is further provided in the embodiments. When the instructions are executed by a computer, steps in the any one method embodiment above are implemented.

A computer program product is further provided in the embodiments. The computer program product implements functions of the any one method embodiment above when executed by a processor.

In the above embodiments, the functions may be wholly or partially implemented by software, hardware, firmware, or any combination thereof. When implemented by software, the functions may be implemented in whole or in part in the form of the computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

"At least one" in the disclosure may also be described as one or more, and a plurality of may be two, three, four or more, which is not limited in the disclosure. In embodiments of the disclosure, for a type of technical feature, technical features in the type of technical feature are distinguished by "first", "second", "third", "A", "B", "C" and "D", and there is no order of precedence or magnitude between technical features described in "first", "second", "third", "A", "B", "C" and "D".

As used herein, the terms "machine-readable medium" and "computer-readable medium" refer to any computer program product, device, and/or apparatus (e.g., disk, optical disk, memory, programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to a programmable processor.

The system and technology described herein may be implemented in a computing system (e.g., as a data server) that includes backend components, or in a computing system (e.g., an application server) that includes middleware components, or in a computing system (e.g., a user computer with a graphical user interface or web browser, through which a user can interact with the system and technology described herein) that includes frontend components, or in a computing system including any combination of backend components, middleware components, or frontend components. The components of the system may be interconnected via any form or medium of digital data communication (e.g., communication networks). Examples of communication networks include local area networks (LAN), wide area networks (WAN), and the Internet.

A computer system may include both clients and servers. The client and server are typically located remotely from each other and usually interact through a communication network. The client-server relationship is established by running computer programs on respective computers that have a client-server relationship with each other.

It should be understood that the various forms of processes illustrated above may be used to reorder, add or delete steps. For example, the steps described in the disclosure could be performed in parallel, sequentially, or in different orders, as long as the desired result of the technical solution disclosed in the disclosure is achieved, which is not limited herein.

In addition, it should be understood that various embodiments of the disclosure may be implemented separately or in combination with other embodiments as permitted by the program.

Those skilled in the related art may realize that units and algorithm steps of the examples described with reference to embodiments of the disclosure may be implemented by electronic hardware or a combination of electronic hardware and computer software. Whether the functions are executed by hardware or software depends on a specific application and a design constraint of the technical solution. Those skilled in the art may employ different methods for each specific application to implement the described functions, but such implementation should not be considered beyond the scope of the disclosure.

Those skilled in the art may clearly understand that a detailed working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be included within the protection scope of the disclosure. Therefore, the protection scope of the disclosure shall be subject to the protection scope of claims.

## Claims

1. A method for processing an uplink transmission drop, applied to a terminal, comprising:
determining a first number of uplink transmission drops within a target time interval, wherein the first number comprises a number of time units of the uplink transmission drop within the target time interval, and the time unit is configured or predefined by a network device; and
dropping uplink transmission based on the first number.

2. The method of claim 1, wherein the time unit of the uplink transmission drop comprises a time unit of the uplink transmission dropped due to in-device coexistence (IDC) interference.

3. The method of claim 1 or 2, wherein determining the first number of uplink transmission drops within the target time interval comprises:
determining a first time unit as the time unit of the uplink transmission drop in the case that the first time unit within the target time interval comprises two or more uplink transmissions and at least one of the two or more uplink transmissions is dropped.

4. The method of claim 1 or 2, wherein determining the first number of uplink transmission drops within the target time interval comprises:
determining a first time unit as the time unit of the uplink transmission drop in the case that the first time unit within the target time interval comprises two or more uplink transmissions and all of the two or more uplink transmissions are dropped.

5. The method of any one of claims 1 to 4, wherein determining the first number of uplink transmission drops within the target time interval comprises:
determining a second time unit as the time unit of the uplink transmission drop in the case that the second time unit within the target time interval comprises a segment of a first uplink transmission, a duration of the segment in the second time unit is greater than a preset duration, and the first uplink transmission is dropped.

6. The method of any one of claims 1 to 4, wherein determining the first number of uplink transmission drops within the target time interval comprises:
determining a second time unit as the time unit of the uplink transmission drop in the case that the second time unit within the target time interval comprises a first segment of a second uplink transmission and the second uplink transmission is dropped.

7. The method of claim 6, further comprising:
determining a third time unit as the time unit of the uplink transmission drop in the case that the third time unit within the target time interval comprises a second segment of the second uplink transmission.

8. The method of any one of claims 1 to 4, wherein determining the first number of uplink transmission drops within the target time interval comprises:
determining a fourth time unit or a fifth time unit as the time unit of the uplink transmission drop in the case that the fourth time unit within the target time interval comprises a third segment of a third uplink transmission, the fifth time unit adjacent to the fourth time unit comprises a fourth segment of the third uplink transmission, and the third uplink transmission is dropped

9. The method of any one of claims 1 to 7, wherein the time unit comprises any one of:
a system frame number (SFN);
a subframe;
a slot;
a symbol; or
a preset duration.

10. The method of any one of claims 1 to 9, further comprising:
receiving a first configuration from the network device, the first configuration comprising the time unit.

11. The method of any one of claims 1 to 10, before determining the first number of uplink transmission drops within the target time interval, further comprising:
receiving a second configuration, the second configuration comprising the target time interval and a second number, and the second number being a maximum number of uplink transmission drops allowed.

12. The method of claim 11, wherein dropping the uplink transmission based on the first number comprises:
determining that dropping the uplink transmission is allowed in the case that the first number is less than the second number; and
determining that dropping the uplink transmission is not allowed in the case that the first number is greater than or equal to the second number.

13. An apparatus for processing an uplink transmission drop, comprising:
a determining module, configured to determine a first number of uplink transmission drops within a target time interval, wherein the first number comprises a number of time units of the uplink transmission drop within the target time interval, and the time unit is configured or predefined by a network device; and
a control module, configured to drop uplink transmission based on the first number.

14. A communication device, comprising: a transceiver; a memory; and a processor, connected to the transceiver and the memory respectively, configured to control receiving and transmitting of a wireless signal of the transceiver by executing computer-executable instructions in the memory, and capable of implementing the method of any one of claims 1 to 12.

15. A computer storage medium for storing computer-executable instructions, wherein when the computer-executable instructions are executed by a processor, the method of any one of claims 1 to 12 is implemented.
